(19) **Europäisches Patentamt**

**European Patent Office**

**Office européen des brevets**

(11) **EP 0 777 128 B1**

(12) **FASCICULE DE BREVET EUROPEEN**

(45) Date de publication et mention
de la délivrance du brevet:
**07.11.2001 Bulletin 2001/45**

(51) Int Cl.⁷: **G01S 5/02**, G01S 1/02,
G05D 1/08

(21) Numéro de dépôt: **96402579.5**

(22) Date de dépôt: **28.11.1996**

(54) **Procédé et dispositif de mesure d'attitude de satellite**

Verfahren und Gerät zur Lagemessung eines Satelliten

Method and device for attitude measurement of a satellite

(84) Etats contractants désignés:
**BE DE ES GB IT SE**

(30) Priorité: **01.12.1995 FR 9514228**

(43) Date de publication de la demande:
**04.06.1997 Bulletin 1997/23**

(73) Titulaire: **Astrium SAS**
**78140 Velizy-Villacoublay (FR)**

(72) Inventeur: **Damilano, Patrice**
**31000 Toulouse (FR)**

(74) Mandataire: **Fort, Jacques**
**CABINET PLASSERAUD**
**84, rue d'Amsterdam**
**75440 Paris Cedex 09 (FR)**

(56) Documents cités:
**DE-A- 3 417 661** **US-A- 4 405 986**

- **500 YEARS AFTER COLUMBUS - NAVIGATION CHALLENGES OF TOMORROW, MONTEREY, CA., MAR. 23 - 27, 1992, 1 Janvier 1992, INSTITUTE OF ELECTRICAL AND ELECTRONICS ENGINEERS, page 544 XP000344349 STEIN B A ET AL: "SATELLITE ATTITUDE DETERMINATION USING GPS"**
- **POSITION LOCATION AND NAVIGATION SYMPOSIUM (PLANS), LAS VEGAS, APR. 11 - 15, 1994, 11 Avril 1994, INSTITUTE OF ELECTRICAL AND ELECTRONICS ENGINEERS, pages 598-604, XP000489397 UNWIN ET AL: "RESULTS FROM THE POSAT GPS EXPERIMENT"**
- **SIGNAL PROCESSING THEORIES AND APPLICATIONS, BARCELONA, SEPT. 18 - 21, 1990, vol. 3, 18 Septembre 1990, TORRES L;MASGRAU E; LAGUNAS M A, pages 1747-1750, XP000365903 LUCAS R ET AL: "GLOBAL POSITIONING SYSTEM INTEGRATED NAVIGATION AND ATTITUDE DETERMINATION SYSTEM (GINAS)"**

**Description**

La présente invention a pour objet un dispositif et un procédé de mesure d'attitude d'un satellite terrestre dans un trièdre de référence. Elle trouve une application particulièrement importante dans le cas des satellites placés en orbite basse, entre 400 km et 1400 km d'altitude.

A l'heure actuelle, on mesure l'attitude des satellites en utilisant des capteurs optiques d'astres (capteurs d'horizon terrestre ou solaire, capteurs stellaires). Parmi ces dispositifs, les capteurs stellaires ont l'avantage d'une précision élevée. En contrepartie, les dispositifs comportant un capteur stellaire présentent l'inconvénient d'être aveugles lorsque le capteur est face à un trou d'étoiles, ou lorsqu'il est ébloui par un astre constituant une source de lumière intense.

Il est nécessaire de conserver une mesure d'attitude du satellite même pendant les périodes où le capteur optique est aveugle, notamment pour pouvoir commander l'attitude au cours de ces périodes, qui peuvent aller jusqu'à 5 % du temps sur un satellite en orbite basse. On peut munir à cet effet le dispositif de gyroscopes. Ils fournissent une référence pendant les périodes d'aveuglement, mais ne permettent pas une mesure absolue et ont une dérive.

On a proposé de remplacer les capteurs stellaires par des dispositifs GPS à trois récepteurs. Mais ils assurent une précision bien moindre (US-A-5 101 356).

La présente invention vise notamment à fournir un dispositif de mesure d'attitude comportant, en plus d'un ou de plusieurs capteurs d'astres, des moyens permettant de conserver une précision de mesure peu dégradée pendant les périodes d'aveuglement.

Dans ce but, l'invention propose notamment un dispositif conforme à la revendication 1 et un procédé conforme à la revendication 6.

Aux altitudes comprises entre 400 et 1400 km, un satellite est toujours en vue directe d'au moins trois satellites GPS, ce qui permet une mesure d'attitude permanente.

Une mesure faite uniquement à partir des signaux reçus des satellites GPS aurait une précision nettement inférieure à celle obtenue à l'aide d'un capteur d'astres. Mais on peut calibrer les moyens de mesure et de calcul à partir des informations fournies par le capteur stellaire. Le dispositif permet alors d'obtenir, pendant les trous d'étoile ou les éblouissements, une précision presque égale à celle fournie à partir de données fournies par le capteur stellaire.

Le recours au GPS permet de plus d'écarter un défaut des dispositifs utilisant un capteur stellaire, seul ou en association avec un gyroscope, qui est la nécessité d'une procédure initiale de reconnaissance de constellations dans le champ du capteur. En effet, le recours au GPS permet de connaître à tout moment la position du satellite, son vecteur vitesse et l'heure. Le GPS permet de plus de connaître l'attitude initiale avec une précision suffisante pour identifier les étoiles qui se trouvent dans le champ du capteur et supprimer la nécessité d'une recherche de constellations.

L'écartement entre les antennes de réception des signaux à radio-fréquence provenant des satellites GPS est en général nettement supérieur à la longueur d'onde (environ 20 cm) des signaux radio-fréquence, fournis par les satellites GPS. Une ambiguïté initiale peut donc exister sur l'attitude, du fait que le déphasage n'est mesuré que modulo $2\pi$. Le doute peut être levé de plusieurs façons. Le mode d'acquisition du satellite peut être tel que la précision du pointage initial soit suffisante pour qu'il n'y ait pas d'ambiguïté. Le nombre $n$ d'antennes peut être suffisant pour que le doute puisse être levé en effectuant une corrélation entre plusieurs mesures d'attitude effectuées chacune en utilisant un jeu distinct de trois antennes. Enfin, les informations fournies par le magnétomètre dont est généralement muni un satellite placé dans le champ magnétique terrestre permettent une mesure d'attitude grossière, mais suffisante pour lever le doute.

Les caractéristiques ci-dessus et d'autres apparaîtront mieux à la lecture de la description qui suit d'un mode particulier de réalisation, donné à titre d'exemple non limitatif. La description se réfère aux dessins qui l'accompagnent, dans lesquels :

- la figure 1 est un schéma de principe montrant les paramètres qui permettent de définir l'attitude d'un satellite placé sur une orbite terrestre ;
- la figure 2 montre une implantation possible d'un capteur stellaire et d'antennes GPS sur un satellite, permettant de mettre en oeuvre l'invention ;
- la figure 3 est un schéma de principe de la mesure d'attitude d'un satellite par interférométrie GSM, faisant également apparaître l'effet de trajets multiples ;
- la figure 4 est un organigramme montrant les étapes d'un calcul d'attitude à l'aide d'un capteur stellaire ;
- la figure 5 est un organigramme de l'algorithme de sélection entre modes de mesure d'attitude ;
- la figure 6 est un organigramme de principe, indiquant la séquence d'opérations permettant d'effectuer une mesure fine d'attitude, par calibrage des moyens utilisant le système GPS.
- la figure 7 est un organigramme détaillant l'algorithme de calibration des moyens de calcul d'attitude par interférométrie GPS, à l'aide du capteur stellaire ;

-   la figure 8 détaille la séquence des calculs.

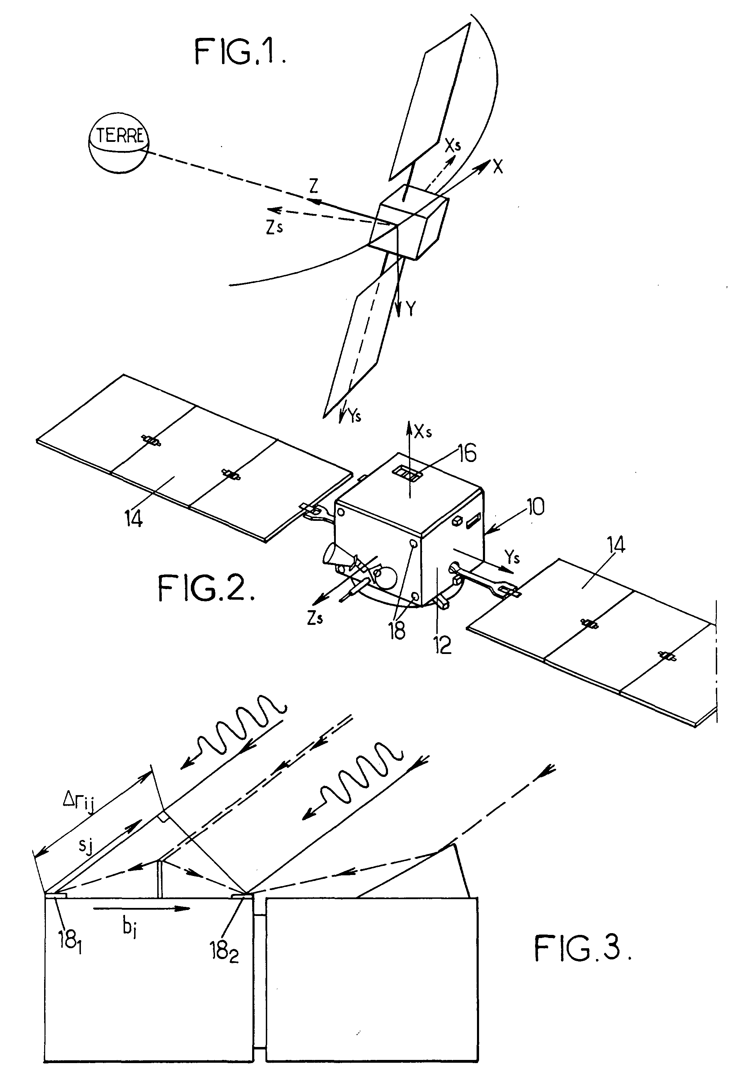

Habituellement, on cherche à connaître l'attitude d'un satellite par rapport à un trièdre de référence lié à l'orbite, ou repère orbital local. La figure 1 montre un tel trièdre de référence, constitué par un axe Z pointé vers la terre, un axe Y normal au plan de l'orbite et un axe X dans le sens de la vitesse. L'attitude du satellite peut alors être définie par la matrice de passage d'un trièdre lié au satellite, au repère orbital local XYZ. Ce trièdre lié au satellite peut notamment comporter un axe Ys orthogonal à deux faces (nord et sud d'un satellite sur orbite équatoriale par exemple), un axe Zs (dont l'orientation de consigne est vers la terre dans le cas fréquent d'un pointage géocentrique) et un axe Xs orthogonal aux deux précédents.

La figure 2 montre une constitution possible d'un satellite 10 dont l'attitude par rapport à la terre doit être déterminée. Ce satellite comporte un corps 12 et des panneaux solaires 14. Sur le corps est placé un capteur stellaire 16 ayant un champ angulaire étendu. Ce capteur stellaire peut être complété par un capteur d'horizon terrestre ou solaire.

Pour la mise en oeuvre de l'invention, on peut notamment utiliser un capteur stellaire 16 à grand champ. Un champ de 30 x 30°, ou plus généralement compris entre 25 x 25° et 35 x 35° est généralement bien approprié. Il permet une mesure d'attitude suivant trois axes dès qu'au moins deux étoiles sont dans le champ de vue. Un tel capteur présente l'avantage d'autoriser la détection uniquement sur la base des étoiles ayant une magnitude faible, inférieure à quatre par exemple. Ainsi le catalogue d'étoiles à mémoriser ne dépasse pas 300 étoiles, ce qui facilite la gestion et autorise le traitement de l'image à bord du satellite.

Conformément à l'invention, le corps 12 du satellite porte également au moins trois antennes de réception des signaux émis par les satellites GPS. Dans le cas illustré sur la figure 2, quatre antennes 18 sont prévues, aux quatre coins du corps du satellite de façon à avoir une précision maximale. Comme on le verra plus loin, chaque mesure d'attitude par interférométrie GPS peut être faite en utilisant un jeu de trois antennes seulement. En effectuant plusieurs mesures, chaque fois avec un jeu de trois antennes différent, on peut augmenter la précision et également effectuer des levés de doute.

Pour réduire les effets de trajets multiples provoqués par des réflexions des signaux hyperfréquence GPS, il est avantageux de munir chaque antenne 18 d'un masque qui limite l'angle au sommet du cône de réception à une valeur inférieure à 180°, par exemple de 140°. Dans le cas d'un satellite placé sur une orbite basse (entre 400 et 1400 km d'altitude), le nombre de satellites en vue directe varie, sur une période de douze heures, entre trois et huit avec un tel masque.

La figure 3 montre le principe de la mesure d'attitude par interférométrie à partir des signaux fournis par deux antennes GPS. Le déphasage entre les signaux fournis par les deux antennes $18_1$ et $18_2$ dépend de l'orientation de la base b (ligne reliant $18_1$ et $18_2$) par rapport à la direction définie par un vecteur unitaire $s_j$ de l'onde incidente provenant d'un satellite GPS d'ordre j. Le nombre de mesures possibles est égal au produit du nombre de satellites GPS simultanément visibles par le nombre de bases d'antennes disponibles. Souvent, on regroupe ces antennes de façon que l'une constitue une antenne maître, formant une référence commune, et chacune des autres une antenne esclave.

Avec les notations suivantes :

| | |
|---|---|
| $b_i$ : | base d'antenne d'ordre i, |
| $B =$ | $(b_1, ..., b_i, ...)$, |
| $s_j$ : | vecteur unitaire du signal incident pour le satellite GPS d'ordre j, |
| $S =$ | $(s_1, ..., s_j, ...)$ |
| A : | matrice de rotation de passage du repère de consigne au repère satellite, |
| $\Delta\Phi_{ij}$: | différence de phase entre deux antennes, pour la porteuse provenant du satellite GPS d'ordre j, |
| $\lambda$ : | longueur d'onde de la porteuse GPS considérée, |
| $\delta\phi_{ij}$: | perturbation due aux multi-trajets différentiels entre les deux antennes de la base (différence entre diagrammes de phase) pour la base i et le satellite j, |
| $b_{ij}$ : | bruit pour la base i et le satellite GPS d'ordre j, |
| $B_o =$ | $(b_{11}, ..., b_{ij}, ...)$. |

On a :

$$\Delta\Phi_{ij} = (2\pi/\lambda)b^T_{\,i}.A.s_j + \delta\Phi_{ij} + b_{ij} \qquad (1)$$

Dans cette formule (1), $\delta\Phi_{ij}$ constitue un terme d'erreur, dû essentiellement aux trajets multiples, différent pour chaque base et chaque satellite GPS. Ce terme évolue, lentement dans le temps. En conséquence, une valeur calculée par calibrage à l'aide du capteur stellaire peut être conservée pendant une période d'aveuglement qui suit.

En posant :

$$R = (\lambda/2\pi)\Delta\Phi_{11}, \ldots (\lambda/2\pi)\Delta\phi_{ij}, \ldots) \qquad (2)$$

on peut écrire :

$R = B^T A.S$, en prenant en compte l'ensemble des mesures.

Dès que trois satellites GPS sont visibles, on peut inverser les matrices B et S dans le plan des antennes GPS avec un algorithme de type des moindres carrés et obtenir la matrice de rotation A :

$$A = (B.B^T)^{-1}.B.R.S^T(S.S^T)^{-1} \qquad (3)$$

La matrice A peut ensuite être complétée en dehors du plan des antennes en utilisant la relation :

$$A^T = A^{-1} \qquad (4)$$

caractéristique des rotations.

On voit qu'à partir de la connaissance des bases $b_i$ et de la différence de phase entre antennes GPS pour chacun des satellites GPS visibles, on peut mesurer l'attitude. Chaque différence de marche est constituée par le produit scalaire du vecteur base d'antennes $b_i$ et du vecteur unitaire $s_j$ de la direction du signal (vecteur satellite - satellite GPS observé). Ce produit scalaire fait intervenir la matrice de rotation entre le repère satellite et le repère terrestre dans lequel sont données les sorties du récepteur GPS. Il suffit donc de deux bases d'antennes, donc de trois antennes, et de deux satellites GPS pour déterminer l'attitude suivant trois axes du satellite.

Toutefois, il existe une ambiguité sur chaque mesure, qui ne peut être levée qu'en connaissant le nombre de longueurs d'onde de la porteuse entre les mesures des deux antennes GPS de la base considérée. Ce problème se pose dès que l'incertitude sur le pointage dépasse 10° pour $|b_i| = 1$ m et $\lambda = 0,20$ m.

Il suffit en conséquence que la procédure d'acquisition garantisse un pointage meilleur que 10° pour écarter le problème. Dans le cas contraire, l'ambiguité peut être levée par comparaison entre les résultats fournis par un nombre élevé de bases.

La précision obtenue par interférométrie GPS seule est limitée par des sources d'erreur.

Une première source est constituée par les trajets multiples tels que ceux montrés sur la figure 3. Cet effet, lié à l'emploi de radio-fréquences, est reproductible.

D'autres sources de bruit, tels que des différentiels entre biais de câbles, entre centres de phase des antennes GPS, entre alignement des antennes, peuvent être assimilés aux bruits dûs aux trajets multiples.

Enfin, il existe un bruit de mesure, essentiellement dû au bruit thermique des antennes.

Toutes ces sources de bruit limitent la précision qu'il serait possible d'atteindre, par utilisation du système GPS seul, à une valeur de l'ordre de 0,5°, même avec un filtrage temporel sur plusieurs minutes.

L'emploi, en combinaison, de l'interférométrie GPS et d'un capteur stellaire permet d'obtenir une précision de l'ordre de celle du capteur stellaire pendant les périodes où ce dernier est inutilisable.

Avant de décrire le mode de mesure d'attitude à partir des informations fournies par le capteur stellaire et le calibrage des moyens de mesure par interféromètre GPS, on définira plus complètement un mode de calcul d'attitude par interférométrie GSM.

Comme déjà indiqué, l'attitude du satellite peut être définie par la matrice A de passage du repère satellite Xs Ys Zs au repère orbital XYZ.

Pour une base d'antennes définie par $\vec{b}_i$ (fig. 3), la différence de parcours du signal reçu d'un satellite GPS d'ordre i est :

$$\Delta r_{ij} = \vec{b}_i.A(\theta)\vec{s}_j$$

où $A(\theta)$ est l'inconnue.

Un récepteur associé aux antennes $18_1$ et $18_2$ constituant la base i permet de mesurer la différence de phase $\Delta\Phi$ puis, à un nombre entier <u>k</u> de longueurs d'onde $\lambda$ près, est :

$$\Delta r = (\lambda/2\pi)(\Delta\Phi + 2k\pi)$$

L'ensemble des mesures pour plusieurs bases d'antennes et plusieurs satellites GPS fournit un système d'équations à trois inconnues dont le nombre est surabondant. Pour des angles de dépointage faibles, ces équations sont linéaires et permettent une résolution par la méthode des moindres carrés. Dans la pratique, il est toujours possible de se ramener à cette situation par un choix approprié du repère XsYsZs lié au satellite.

Si on désigne par :

$$\vec{\theta} = \begin{pmatrix} \theta x \\ \theta y \\ \theta z \end{pmatrix}$$

le vecteur de petits angles permettant de passer du repère de consigne XYZ au repère satellite courant XsYsZs, l'équation de mesure, pour la base d'antenne $b_i$ (en repère satellite) et un satellite GPS dont la direction en repère orbital local est $s_j$, est :

$$\Delta r_{ij} = \vec{b_i}.A(\theta)\vec{s_j}$$

avec :

$$A(\theta) = \begin{pmatrix} 1 & \theta_z & -\theta_y \\ -\theta_z & 1 & \theta_x \\ \theta_y & -\theta_x & 1 \end{pmatrix}$$

qu'on peut écrire :

$$\Delta r_{ij} = \vec{b_i}.\vec{s_j} + (\vec{b} \wedge \vec{s_j})\theta$$

Si on désigne par H la matrice d'observation :

$$\left( H = \frac{\partial \Delta r}{\partial \theta} \right)$$

la ligne de la matrice H qui correspond à la mesure pour la $i^{ème}$ base et le $j^{ème}$ satellite GPS est :

$$h_{ij} = (\vec{b_i} \wedge \vec{s_j})$$

Avec quatre antennes GPS, dont une est utilisée comme antenne maître, on dispose de trois bases. Les mesures nécessaires peuvent être faites en utilisant un multiplexeur qui permet de relier successivement chacune des antennes à une chaîne de mesure comportant un récepteur, un corrélateur faisant intervenir les composantes en phase et en quadrature du signal et, pour chaque antenne esclave, un filtre différentiel de phase qui fournit une différence de phase.

Il faut noter au passage que les erreurs dues aux antennes 18 (différences de retard par exemple) sont communes à tous les satellites GPS. Il est donc facile de les prendre en compte.

Pour résoudre le système d'équations (dont le nombre nxm est le produit du nombre n de bases par le nombre m de satellites GPS utilisés) par la méthode des moindres carrés, on cherche la valeur θ qui minimise la valeur quadratique moyenne des résidus :

$$Q(\theta) = \sum_{q=1}^{n_m} p_q (\Delta r_q - \Delta r(\theta))^2$$

où $\Delta r_q$ est chaque valeur mesurée et $\Delta r(\theta)$ est la valeur théorique pour l'orientation θ.

Il est avantageux de donner à chaque mesure un poids proportionnel à $//b_i \wedge \vec{S}_j//^2$. Si W est la matrice diagonale de rang $n_m$ dont les termes diagonaux sont les poids affectés aux mesures et les autres termes sont nuls, la solution θ est

$$\vec{\theta} = (H^T W H)^{-1} \ H^T W R$$

où R est le vecteur des résidus, constitué par les différences entre les mesures réelles et les mesures théoriques pour $\vec{\theta}=0$ qu'il est possible de déterminer par étalonnage.

Par dérivation, à l'aide de deux mesures successives qui donnent $\dot{\Delta}r$, la vitesse angulaire $\dot{\theta}r$ peut également être calculée.

La mesure par interférométrie GPS peut être effectuée à cadence élevée mais la précision de la mesure d'attitude par interférométrie GPS seule est limitée à une valeur qui peut être insuffisante. Par exemple, elle est d'environ 0,5° à 3° pour un système GPS seul et un satellite du genre défini plus haut. Cette limitation est notamment due à l'existence de trajets multiples, des différences entre biais de câble de liaison et des différences entre les centres de phase des antennes GPS.

Les deux dernières sources d'erreur peuvent être étalonnées une fois pour toutes.

La précision peut être notablement améliorée en tenant compte de l'erreur due aux trajets multiples par des calibrages répétés à l'aide du capteur d'étoiles, qui permet d'atteindre une précision de 0,15° environ sur son axe de visée et de maintenir une précision presque égale par interférométrie GPS et calibrage.

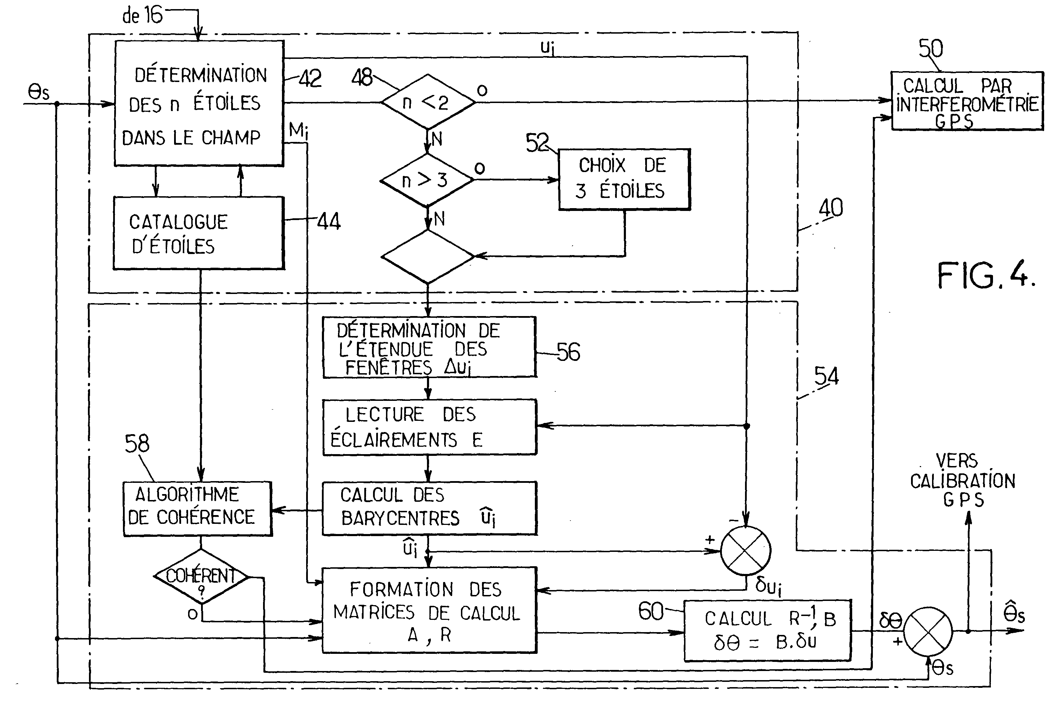

Avant de décrire le mode de calibrage, il peut être utile d'indiquer un processus possible de mesure d'attitude par un capteur stellaire. Celui montré en figure 4 est utilisable si le pointage initial θ du satellite est connu avec une approximation suffisante pour qu'une reconnaissance de constellation soit inutile.

Le capteur peut être d'un type matriciel connu, qu'il n'est donc pas nécessaire de décrire. Il reçoit les angles identifiant le pointage $\theta_n$ obtenus lors de la mesure précédente d'ordre n et comporte une logique de sélection 40 destinée à choisir un groupe de trois étoiles pour chaque calcul, parmi les nombreuses étoiles contenues dans le champ de vision du capteur 16 (figure 2).

L'organe d'entrée de la logique 40 est un élément 42 de reconnaissance des étoiles observées, par référence à un catalogue contenu dans une mémoire morte 44. Il fournit, en sortie,

- les positions angulaires $u_i$ présumées des étoiles observées, déduites du catalogue,
- les valeurs $M_i$ des magnitudes de ces étoiles, dans la mesure où il en est tenu compte,

Un premier test 48 est effectué sur le nombre d'étoiles visibles. S'il est inférieur à 2, aucune mesure n'est effectuée et la main passe au système 50 de calcul d'attitude par interférométrie GSM.

Si le nombre d'étoiles dépasse 3, une autre étape 52 permet de sélectionner trois étoiles ; par exemple les trois étoiles choisies peuvent être soit les trois plus brillantes, soit l'étoile la plus brillante et celles qui ont le plus grand écart angulaire entre elles et avec l'étoile la plus brillante.

Le calculateur proprement dit 54 comporte, en entrée, un organe ou une étape 56 de choix des fenêtres du champ de vision à analyser pour chaque étoile sélectionnée. Il fournit, en sortie, une demi-largeur de fenêtre d'étendue angulaire $\Delta u_i$ pour chacune des étoiles retenues, de position $u_i$.

Typiquement, le détecteur comporte une matrice CCD dont les sites photosensibles sont lus dans chacune des trois fenêtres, s'étendant chacune de $u_i - \Delta u_i$ à $u_i + \Delta u_i$, fournissant ainsi des signaux d'éclairement E pour tous les sites photosensibles dans chaque fenêtre. Un calcul classique de barycentre de chaque tache correspondant à une étoile fournit une valeur estimée $\hat{u}_i$, généralement différente de $u_i$ et due à l'écart entre la valeur θs d'entrée et la valeur réelle dont on cherche une estimée θs.

La cohérence des mesures peut être déterminée en appliquant en 58 un algorithme d'évaluation d'un indice de cohérence utilisant comme référence les caractéristiques mémorisées de l'étoile observée et permettant d'écarter les erreurs dues à la présence d'un autre satellite ou d'une planète lointaine dans le champ de vision. L'indice obtenu est comparé avec un seuil.

Les résultats $\hat{u}_i$ retenus sont utilisés pour former la matrice A de rotation et la matrice R déjà définie par la formule (2) ci-dessus.

La matrice A est formée des éléments $-\hat{u}_i$, c'est-à-dire des éléments matriciels, qui représentent les rotations autour du vecteur $\vec{u}_i$ :

$$A = (..., \hat{u}_i, ...)$$

La matrice R est formée des termes $R_{ii}$; qui sont fonctions de la magnitude $M_i$ de l'étoile mesurée et de la direction mesurée $\hat{u}_i$ ; on peut également lui donner une valeur fonction de $\theta'$, c'est-à-dire de la vitesse de défilement.

$$R = (r_{ii})$$

avec $r_{ii} = f(M_i, \hat{u}_i, \theta')$
pour i = 1, 2 ou 3 en général.

Enfin, on calcule des valeurs $\delta u_i$ correspondant chacune à la différence entre une position prédite à partir du catalogue $u_i$ et la position effective estimée $\hat{u}_i$ obtenue par la mesure.

Au cours d'une étape suivante de calcul, en 60, on calcule la matrice $R^{-1} = (...,1/r_{ii},...)$ qu'on peut considérer comme la matrice inverse de la matrice de covariance des bruits. En première approximation, c'est une matrice diagonale, ce qui minimise les opérations. Il devient alors possible de calculer B qui est la matrice principale du problème. C'est la matrice qui permet de définir le vecteur des différences entre l'attitude prédite et l'attitude mesurée.

Le produit $B.\delta u$ fournit l'incrément d'attitude $\delta\theta$ qui est ajouté à la valeur d'origine $\theta_s$ et fournit une estimation $\theta_s$ qui sera utilisée à la place de $\theta$ pour la mesure suivante et servira à recalibrer le dispositif de mesure par interférométrie GPS. Pour obtenir une précision suffisante, une cadence de mesure de 8 Hz au minimum est nécessaire en général.

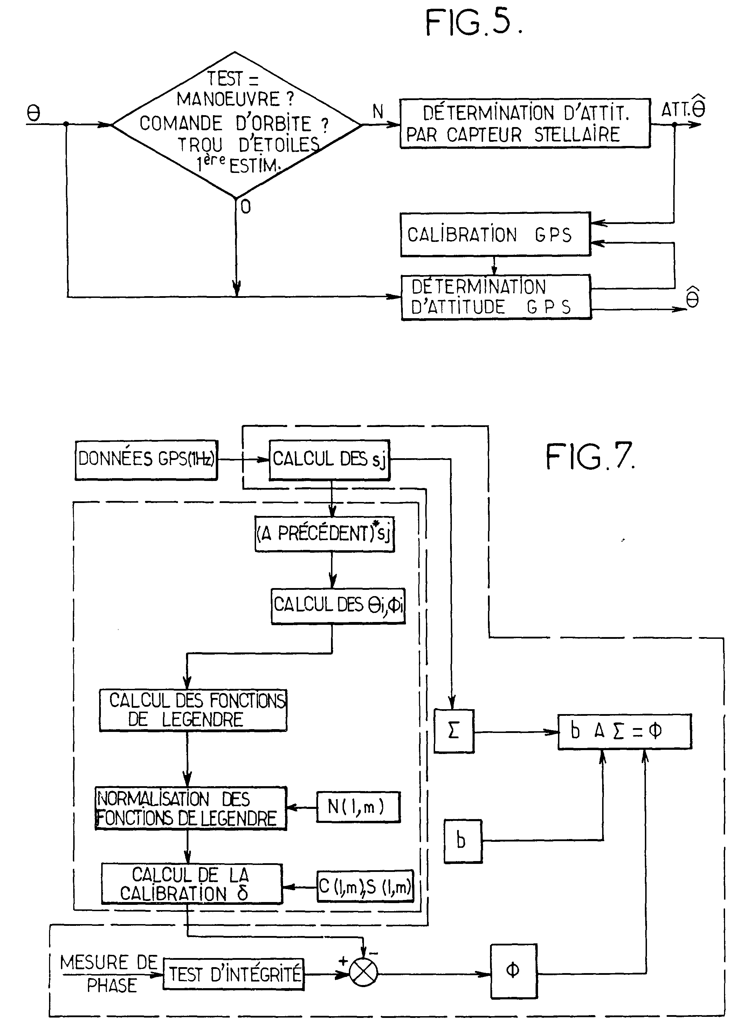

L'algorithme de sélection entre mesure par interférométrie GPS et mesure à l'aide du capteur stellaire peut être celui schématisé en figure 5, en supposant une mesure grossière initiale déjà disponible, par exemple par magnétomètre trois axes. La mesure est effectuée par capteur stellaire, sauf dans les cas où elle n'est pas possible. Les résultats de la mesure, quel que soit le mode utilisé, sont ré-introduits à l'entrée.

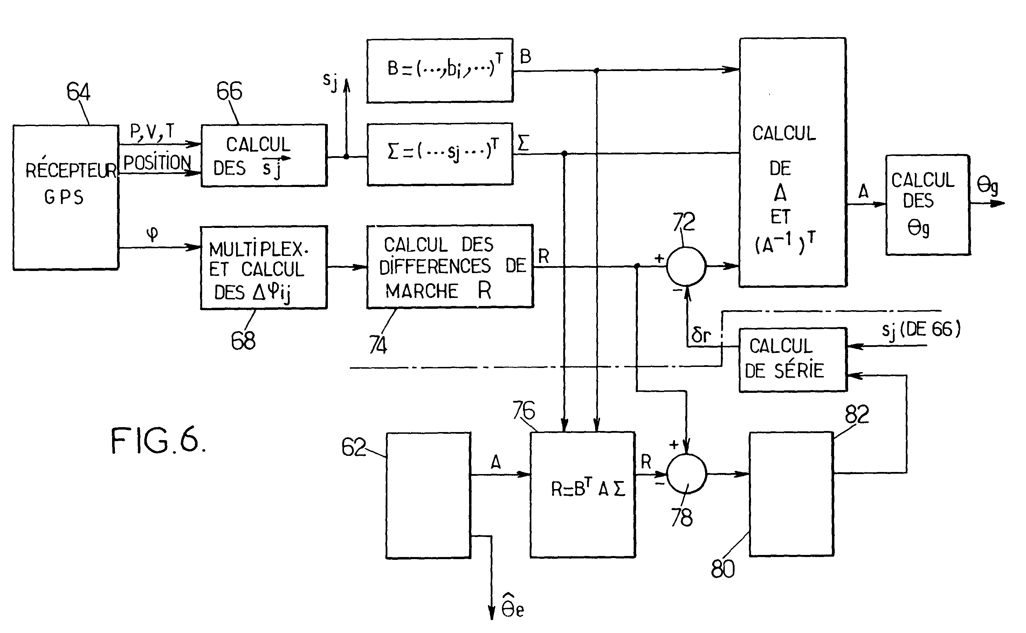

Enfin on décrira, en faisant référence à la figure 6, le mode de calibration du dispositif de mesure par interférométrie GPS. Sur cette figure, le bloc 62 désigne l'ensemble des moyens montrés en figure 4 et qui fournissent les angles définissant l'attitude (qu'on désignera dans leur ensemble par $\theta_e$ pour les différencier des angles $\theta_g$ obtenus par interférométrie GPS) et la matrice de rotation A.

Le récepteur GPS, relié séquentiellement aux différentes antennes, fournit :

- la position P et la vitesse V du satellite, et l'heure T,
- l'orientation des satellites GPS,
- les phases $\phi$ pour les différentes antennes et les différents satellites correspondant aux vecteurs unitaires $s_j$.

A partir de là, et grâce au multiplexage permettant de comparer les phases $\phi$, on calcule en 68 les différences de phase $\Delta\phi_{ij}$ pour toutes les bases $b_i$. En 66, les vecteurs unitaires $\vec{s}_j$ sont également calculés. On en déduit le vecteur de direction des signaux GPS, constitué par la matrice somme $\Sigma$ :

$$\Sigma = (..., s_j,...)$$

Les différences de parcours déjà définies sont, elles, calculées à partir des valeurs $\Delta\Phi$ et donnent naissance à une matrice $\Delta r$.

Un bloc séparé 70 permet de disposer du vecteur des bases d'antennes

$$B = (... b_i ...)^T$$

A partir de là, par la formule (3) ci-dessus, on peut obtenir A qui s'écrit également, dans le plan des antennes :

$$A = (B.B^T)^{-1}.B.R.\Sigma(\Sigma.\Sigma^T)^{-1}$$

De la matrice A dans le plan des antennes, on peut déduire la matrice de rotation hors de ce plan (formule 4). La connaissance de A permet en conséquence de calculer les angles d'attitude, désignés par $\theta$g pour les différencier de ceux obtenus à l'aide du capteur stellaire.

Le calcul décrit ci-dessus ne fait pas intervenir la calibration. Celle-ci conduit à ajouter, aux valeurs R calculées à partir des signaux interférométriques, des termes correctifs $\delta$r, en 72.

Les moyens de calibration 74, qui fournissent les termes correctifs, comprennent des moyens 76 matériels ou logiciels, qui calculent une différence de marche prédite $R_p$, cette fois à partir des vaeurs de A obtenues à l'aide du capteur stellaire, et de $\Sigma$ et B provenant du dispositif d'interférométrie :

$$R_p = B^T.A.\Sigma$$

Par soustraction en 78, on obtient une estimation des erreurs sur les différences de marche dues aux multi-trajets, correspondant aux erreurs de phase $d\phi_{ij}$ mentionnées plus haut. A partir de là, un calcul de termes correctifs peut être effectué à partir d'un modèle multi-trajets. On utilisera généralement un modèle en polynômes de Legendre de deux variables qui est bien adapté à la représentation d'une fonction de deux variables, comme la direction du signal GPS incident. Sa précision est celle de la troncature du modèle. L'opération de correction peut comporter successivement :

- en 82, un recalage du calcul des coefficients de la série,
- en 80, un calcul des termes correctifs $\delta$r.

Un calcul doit être effectué pour chaque base $b_i$ et pour chaque direction de satellite GPS $s_j$. Pour diminuer la charge de calcul, on peut prendre le même repère de définition des angles de visée pour toutes les bases d'antennes. Le calcul des fonctions de Legendre n'est alors effectué qu'une fois pour chaque satellite. L'évolution des multi-trajets étant à relativement basse fréquence, la connaissance précédente de l'attitude est suffisante pour déterminer les angles de vue, dans un repère lié aux antennes. Il n'y a donc pas d'itération sur la calibration des multi-trajets. On ne calcule plus qu'autant de séries de Legendre qu'il y a de satellites. Ces séries sont obtenues par récurrence puis normalisées par l'intermédiaire d'un tableau précalculé de tous les facteurs à appliquer sur les fonctions. On dispose alors des matrices nécessaires à la résolution de

$$B^T.A\Sigma = \Phi,$$

où :

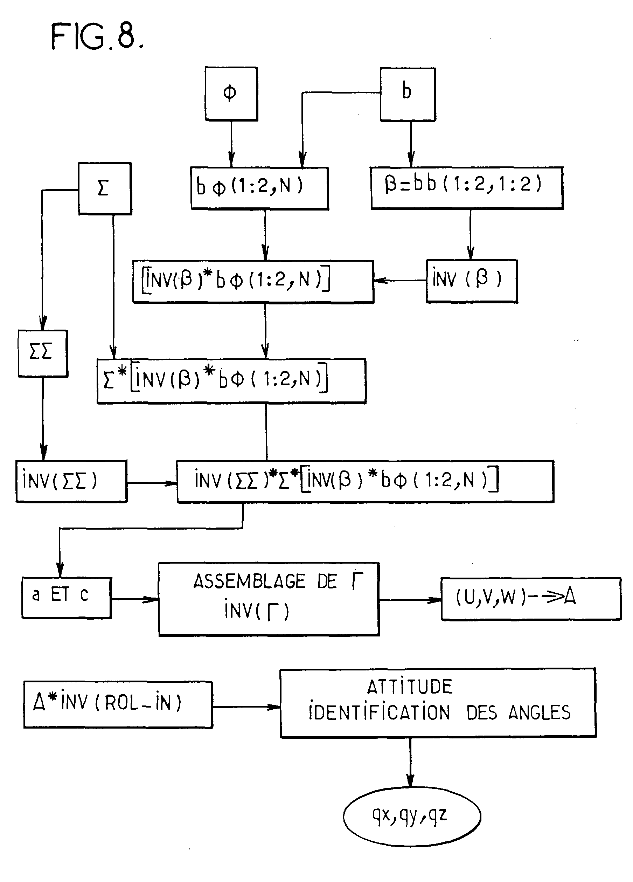

$\Sigma$ est la matrice des $s_j$, en repère inertiel,
B est la matrice des bases d'antennes, en repère satellite,
A est la matrice de passage du repère inertiel au repère satellite. L'ensemble des étapes est résumé sur la figure 7.

La matrice A est déterminée par la méthode des moindres carrés. La matrice B est de rang 2, les quatre antennes étant coplanaires. Il en résulte que $B.B^T$ est de rang 2. On peut poser :

$$b = \left( \begin{array}{cc|c} & & 0 \\ \beta & & 0 \\ \hline 0 & 0 & 0 \end{array} \right) \quad et \quad A = \left( \begin{array}{cc|c} a & & c \\ \hline u & v & w \end{array} \right)$$

où

$\beta$ est de dimension 2 par 2,
a est de dimension 2 par 2,
c est de dimension 2 par 1.

La résolution par les moindres carrés va fournir a et c. Le triplet de scalaires (u,v,w) est déterminé par trois équations supplémentaires, à savoir :

$$\det(A) = 1$$

et

$$AA^T = Id_3 \quad \langle\ =\ \rangle \quad a\begin{pmatrix} u \\ v \end{pmatrix} + cw = \begin{bmatrix} 0 \\ 0 \end{bmatrix}$$

ou encore :

$$\Gamma \begin{bmatrix} u \\ v \\ w \end{bmatrix} = \begin{bmatrix} 0 \\ 0 \\ 1 \end{bmatrix}$$

La matrice d'attitude est alors le produit de A par la matrice de passage du repère orbital local au repère inertiel notée inv(Rol.In) et les angles θx,θy,θz sont alors déterminés par identification. Les étapes du calcul peuvent être celles résumées en figure 8, avec les notations mathématiques usuelles.

**Revendications**

1. Dispositif de mesure de l'attitude d'un satellite terrestre dans un trièdre de référence, ledit dispositif comprenant, placés sur le satellite, un capteur stellaire et n antennes non alignées (n étant au moins égal à trois) de réception de signaux à radio-fréquence provenant de plusieurs satellites d'un système de positionnement global par satellites, des moyens de traitement des signaux à radio-fréquence reçus par les différentes antennes, de mesure de leur déphasage et de calcul d'attitude par interférométrie à partir desdits déphasages **caractérisé en ce que** ce dernier calcul est effectué pendant les périodes où le capteur d'astres ne fournit pas de données utilisables et **en ce qu'**il comprend des moyens de calibrage répétitif des moyens de mesure et de calcul à partir de mesures effectuées par des moyens utilisant le capteur stellaire, pendant les périodes où ce dernier fournit des données utilisables.

2. Dispositif selon la revendication 1, **caractérisé en ce que** le capteur stellaire a un champ de 30 X 30° environ.

3. Dispositif selon l'une quelconque des revendications précédentes, **caractérisé par** des moyens de levé de doute sur la mesure effectuée à partir des signaux d'antenne, comportant par exemple un magnétomètre trois axes.

4. Dispositif selon l'une quelconque des revendications précédentes, **caractérisé en ce qu'**il comporte plus de trois antennes placées aux coins d'une face du satellite et **en ce que** les moyens de calcul d'attitude par interférométrie sont prévus pour effectuer plusieurs calculs, chacun à partir d'une base différente de trois antennes.

5. Dispositif selon la revendication 4, **caractérisé en ce que** les moyens de calcul d'attitude font intervenir n.m mesures, n étant le nombre de bases et m le nombre de satellites GPS utilisés et déterminent l'attitude par la méthode des moindres carrés.

6. Procédé de mesure de l'attitude d'un satellite terrestre dans un trièdre de référence, suivant lequel :

   - on effectue de façon répétitive une mesure d'attitude à l'aide d'un capteur stellaire pendant toutes les périodes où le capteur stellaire fournit l'image d'au moins deux étoiles,
   - on effectue une mesure par interférométrie à partir des signaux fournis par au moins trois antennes GPS portées par le satellite pendant les périodes où le capteur stellaire ne fournit pas de données utilisables, et

- on calibre de façon répétitive les mesures faites par interférométrie à partir des mesures effectuées à l'aide du capteur stellaire, pendant les périodes où ce dernier fournit des données utilisables.

**7.** Procédé selon la revendication 6, **caractérisé en ce qu'**on effectue une première mesure d'attitude à l'aide du capteur stellaire en partant d'une indication d'attitude obtenue par interférométrie GPS pour éviter une procédure de reconnaissance de constellations.

**8.** Procédé selon la revendication 6 ou 7, **caractérisé en ce que** le calibrage est réalisé en utilisant un modèle mathématique en polynômes de Legendre de deux variables.

**Patentansprüche**

**1.** Einrichtung zur Messung der Lage eines Erdsatelliten in einem Referenz-Dreiachssystem, wobei die Einrichtung an dem Satelliten einen Stellarsensor, n nicht ausgerichtete Antennen (n ist wenigstens gleich drei) zum Empfang von mehreren Satelliten eines satellitengestützten globalen Positionierungssystems stammender hochfrequenter Signale sowie Mittel zur Verarbeitung der von den verschiedenen Antennen empfangenen hochfrequenten Signale, zur Messung deren Phasenversatzes und zur interferometrischen Berechnung der Lage anhand der Phasenversätze umfaßt, **dadurch gekennzeichnet, daß** die letztere Berechnung während derjenigen Phasen durchgeführt wird, in denen der Sternensensor keine nutzbaren Daten liefert, und daß sie Mittel zur wiederholten Kalibrierung der Meß- und Berechnungsmittel anhand von Messungen umfaßt, die während solcher Phasen, in denen der Stellarsensor nutzbare Daten liefert, von Mitteln durchgeführt werden, die letzteren Sensor nutzen.

**2.** Einrichtung nach Anspruch 1, **dadurch gekennzeichnet, daß** der Stellarsensor ein Blickfeld von annähernd 30 X 30° besitzt.

**3.** Einrichtung nach einem der vorhergehenden Ansprüche, **gekennzeichnet durch** Mittel zur Ermittlung der Unsicherheit der anhand der Antennensignale durchgeführten Messung, beispielsweise mit einem dreiachsigen Magnetometer.

**4.** Einrichtung nach einem der vorhergehenden Ansprüche, **dadurch gekennzeichnet, daß** sie mehr als drei Antennen umfaßt, die in den Ecken einer Seite des Satelliten angeordnet sind, und daß die Mittel zur interferometrischen Berechnung der Lage dazu ausgelegt sind, mehrere Berechnungen durchzuführen, jede auf Basis anderer drei Antennen.

**5.** Einrichtung nach Anspruch 4, **dadurch gekennzeichnet, daß** die Mittel zur Lageberechnung n m Messungen vornehmen, wobei n die Anzahl der Basen ist und m die Anzahl der genutzten GPS-Satelliten ist, und daß sie die Lage nach der Methode der kleinsten Quadrate bestimmen.

**6.** Verfahren zur Messung der Lage eines Erdsatelliten in einem Referenz-Dreiachssystem, bei dem

- wiederholt eine Lagemessung mit Hilfe eines Stellarsensors während aller Phasen durchgeführt wird, in denen der Stellarsensor das Bild wenigstens zweier Sterne liefert,
- während derjenigen Phasen, in denen der Stellarsensor keine nutzbaren Daten liefert, eine interferometrische Messung anhand von Signalen durchgeführt wird, welche von mindestens drei an dem Satelliten angeordneten GPS-Antennen bereitgestellt werden, und
- während solcher Phasen, in denen der Stellarsensor nutzbare Daten liefert, wiederholt die durch Interferometrie vorgenommenen Messungen anhand von Messungen kalibriert werden, welche mit Hilfe des Stellarsensors durchgeführt werden.

**7.** Verfahren nach Anspruch 6, **dadurch gekennzeichnet, daß** eine erste Lagemessung mit Hilfe des Stellarsensors ausgehend von einer durch GPS-Interferometrie erhaltenen Lageangabe durchgeführt wird, um eine Prozedur zur Konstellationserkennung zu vermeiden.

**8.** Verfahren nach Anspruch 6 oder 7, **dadurch gekennzeichnet, daß** die Kalibrierung unter Verwendung eines mathematischen Modells mit Legendre-Polynomen zweier Variablen erfolgt.

**Claims**

1. Apparatus for measuring the attitude of an earth satellite in a frame of reference, said device comprising, on the satellite, a star sensor and n non mutually aligned antennas (n being at least 3) for receiving radio frequency signals from a plurality of satellites of a satellite global positioning system, means for processing the radio frequency signals received by the different antennas , for measuring phase differences thereof, and for computing the attitude from said phase differences, **characterized in that** the latter computation is carried out during periods when the star sensor does not provide usable data and **in that** it comprises means for repeatedly calibrating the measurement and computation means based on measurements performed by means using said star sensor during periods when the latter provides usable data.

2. Apparatus according to claim 1, wherein the star sensor has a field of about 30°x 30°.

3. Apparatus according to any one of the preceding claims, **characterized by** means for removing ambiguities concerning the attitude measurements based on antenna signals, comprising for instance a 3-axes magnetometer.

4. Apparatus according to any one of the preceding claims, **characterized in that** it has more than three antennas, located at corners of a side of said earth satellite and **in that** the means for computing the attitude by interferometry are arranged for carrying out a plurality of computations, each based on signals received from a different set of three antennas.

5. Apparatus according to claim 4, **characterized in that** the means for computing the attitude take account of n.m measurements, n being the number of bases and m being the number of used GPS satellites and determine the attitude by the least square method.

6. Method for measuring the attitude of an earth satellite in a reference frame, including

   - repeatedly carrying out attitude measurements based on a star sensor during all periods of time when the star sensor delivers an image of at least two stars,
   - carrying out an attitude measurement by interferometry from signals delivered by at least three GPS antennas carried out by the satellite during periods when the star sensor does not provide usable data, and
   - repeatedly calibrating the measurements carried out by interferometry from the measurements based on information received from the star sensor when the latter delivers usable data.

7. Method according to claim 6, **characterized by** carrying out a first attitude measurement with said star sensor starting from an attitude indication obtained by GPS interferometry for avoiding a step of recognition of constellations.

8. Method according to claim 6 or 7, **characterized in that** calibration is carried out by using a mathematic model with Legendre polynoms having two variables.

EP 0 777 128 B1

FIG.1.

FIG.2.

FIG.3.

12

FIG. 4.

# FIG.5.

# FIG.7.

FIG.6.

EP 0 777 128 B1

# FIG.8.

$\phi$

$b$

$\Sigma$

$b\phi(1:2,N)$

$\beta = bb(1:2,1:2)$

$\left[ INV(\beta)^* b\phi(1:2,N) \right]$

$INV(\beta)$

$\Sigma\Sigma$

$\Sigma^* \left[ INV(\beta)^* b\phi(1:2,N) \right]$

$INV(\Sigma\Sigma)$

$INV(\Sigma\Sigma)^* \Sigma^* \left[ INV(\beta)^* b\phi(1:2,N) \right]$

a ET c

ASSEMBLAGE DE $\Gamma$
$INV(\Gamma)$

$(U,V,W) \longrightarrow \Delta$

$\Delta^* INV(ROL-IN)$

ATTITUDE
IDENTIFICATION DES ANGLES

$qx, qy, qz$